# EUROPEAN PATENT SPECIFICATION

(11) **EP 1 657 458 B1**
(45) Date of publication and mention of the grant of the patent: **22.08.2007**
(21) Application number: 05024602.4
(22) Date of filing: 10.11.2005
(51) Int. Cl.: F16C 13/00, F16H 53/06

(54) **Bearing apparatus and method of assembling the same**
Lagervorrichtung und entsprechendes Zusammenbauverfahren
Dispositif de palier et méthode d'assemblage associée

(30) Priority: 11.11.2004 JP 2004327838
(43) Date of publication of application: 17.05.2006
(73) Proprietor: JTEKT Corporation, Osaka-shi Osaka 542-8502 (JP)
(72) Inventor: Ochi, Shinya JTEKT Corporation, Osaka-shi Osaka 542-8502 (JP)
(74) Representative: Schaeberle, Steffen

(56) References cited:
- GB-A- 1 096 237
- US-A- 4 969 261
- US-A- 5 375 323
- US-A1- 2003 037 635
- PATENT ABSTRACTS OF JAPAN vol. 2003, no. 12, 5 December 2003 (2003-12-05) & JP 2004 156688 A (KOYO SEIKO CO LTD), 3 June 2004 (2004-06-03)

## Description

### BACKGROUND OF THE INVENTION

The present invention relates to a bearing apparatus in which a support shaft is interposed between a pair of opposed side walls which constitute a bearing holding member and an outer ring is supported on the support shaft via rollers and a method of assembling the same bearing apparatus, and more particularly to a rocker arm which is attached to a valve train of an engine of an automobile or the like to operate to open and close a valve and a planetary gear system which makes up an automotive automatic transmission (AT).

Such a bearing apparatus is known from US 4 969261 A.

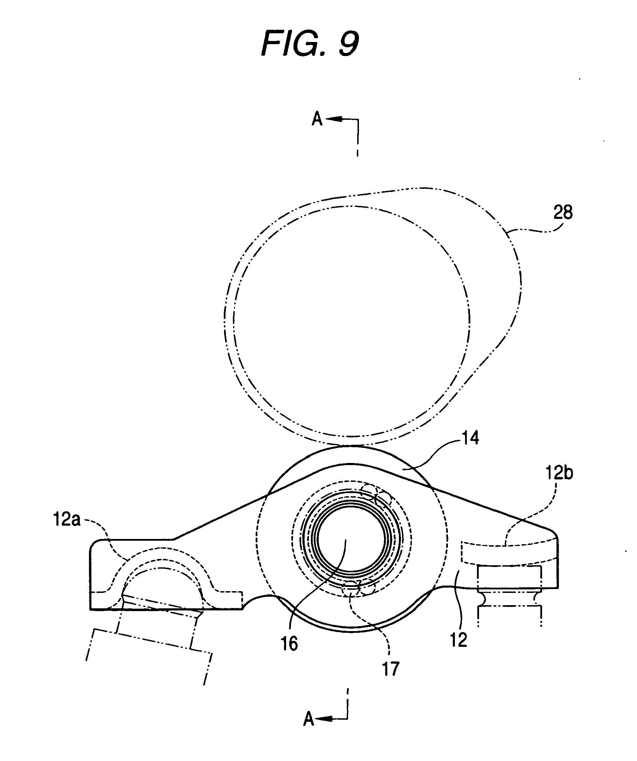

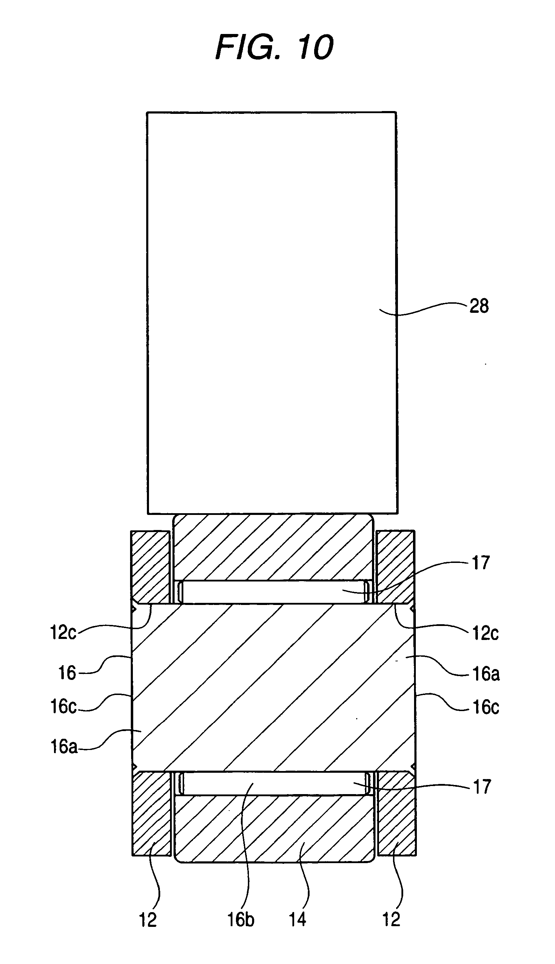

As an example of the bearing apparatus, a rocker arm is attached to a valve train of an automotive engine to operate to open and close a valve of an automotive engine when a body thereof oscillates about a lash adjuster receiving portion (a pivot receiving portion) thereof in association with the rotation of a corresponding cam of the valve train. An example of a related rocker arm will be described with reference to Figs. 9 and 10. Fig. 9 is a side view of the rocker arm and Fig. 10 is a sectional view taken along the line A-A in Fig. 9. The rocker arm shown in these figures includes a rocker arm body made up of a pair of opposed side walls 12. Both the side walls 12 are connected to each other at longitudinal ends thereof through connecting portions, and the connecting portions are made to act as a lash adjuster receiving portion 12a and a valve stem receiving portion 12b, respectively. Through holes 12c are formed at longitudinally intermediate portions of both the side walls 12 in such a manner as to be aligned coaxially with each other. A support shaft 16 is passed through and fitted in the through holes 12c at shaft end portions 12a thereof in such a manner that a shaft intermediate portion 16b thereof extend between both the side walls 12. The shaft intermediate portion 16b of the support shaft 16 rotatably supports an outer ring 14 on an outer circumferential surface thereof via a plurality of needle rollers 17. A cam 28 is in abutment with an outer circumferential surface of the outer ring 14.

In the case that the side walls 12 are thick enough, the support shaft 16 like this can be fixed to the side walls 12 by being fitted in the through holes 12. However, in the case of a rocker arm for a passenger vehicle having side walls 12 thickness of which is for example about 3mm, the strength of the side walls 12 so thinned is not good enough to stand for the aforesaid press fit therein of the support shaft 16, and to cope with this, outside diameter sides of the end faces 16c of both the shaft end portions 16a are crimped to inside diameter side circumferential edges of the through holes 12c with a punching tool or the like so as to fix the support shaft 16 to the side walls 12 (Refer to Patent Document No. 1).

In a case where the end faces 16c of both the shaft end portions 16a are attempted to be crimped to the inside diameter side circumferential edges of the through holes 12c as described above, the shaft end portions 16a of the support shaft 16 need to have such a low hardness that allows the crimping of the end faces thereof, while the shaft intermediate portion 16b thereof needs to have a high hardness as a raceway surface on which the needle rollers 17 roll. Due to this, a partial quenching such as an induction hardening is imparted only to the shaft intermediate portion 16b of the support shaft 16 so as to secure the hardness of the relevant shaft intermediate portion 16b, while no quenching is imparted to both the shaft end portions 16a of the support shaft 16 to thereby leave them as they are.

In recent years, however, in consideration of invasion of foreign matters on to the shaft intermediate portion 16b of the support shaft 16 and wear thereof, greater hardness and higher resistance to wear have been demanded for the support shaft 16, and to meet such a demand, there exist the following problems to be solved. Firstly, since in the event that a surface treatment such as carburizing and nitriding treatments is imparted to the entirety of the support shaft 16, not only the shaft intermediate portion 16b but also the shaft end portions 16a are surface treated to have a high hardness, a costly treatment to prevent carburizing and nitriding needs to be imparted to the shaft end portions when the surface treatment is so imparted. Secondly, when the shaft end faces of the shaft end portions 16a are not crimped sufficiently, a creep is generated between outer circumferential surfaces of the shaft end portions 16a and inner circumferential surfaces of the through holes 12c of the side walls 12, and the shaft end portions 16a and the through holes 12c are worn, leading to a risk that the support shaft 16 is allowed to freely rotate relative to the through holes. 12c. Thirdly, when the shaft end faces of the shaft end portions 16a are crimped, the support shaft 16 is expanded to be deformed by the crimping force, leading to a risk that a defect is generated in rotation of the outer ring 14 which is fitted on the shaft intermediate portion 16b of the support shaft 16. Fourthly, when installing the support shaft 16 between the side walls 12, the support shaft 16 needs to be installed between the side walls 12 by being inserted from the through hole 12c of one of the side walls 12 to the other via the needle rollers 17 and the outer ring 14 while the needle rollers 17 are disposed to be held onto the inner circumferential surface of the outer ring 14 with a holding plug, and this requires a complex and troublesome assembling and the holding plug. The holding plug is an additional assembling jig used exclusively for this purpose. Therefore, there is a problem that more man-hours, time and cost have to be spent.

In addition, a planetary gear assembly which makes up an automatic transmission (AT) which is another example of the bearing apparatus, in which the needle rollers are interposed between the shaft intermediate portion of the support shaft and the outer ring and the shaft end portions thereof are inserted in the opposed shaft end insertion holes, still involves the aforesaid first to fourth problems (refer to Patent Document No. 2).
Patent Document No. 1: JP-A-2004-156688
Patent Document No. 2: JP-UM-A-7-22159

### SUMMARY OF THE INVENTION

Consequently, a problem to be solved by the invention is to provide a bearing apparatus which can facilitate the application of a necessary surface hardening treatment to the whole of the support shaft, prevent the occurrence of a situation in which the support shaft, which should not be allowed to rotate relative to the side walls, is allowed to freely rotate thereto, prevent the occurrence of a situation in which the outer ring fitted on the support shaft is not allowed to rotate or made difficult to rotate thereon and facilitate the installation of the support shaft, the rollers and the outer ring between both the side walls without requiring many assembling man-hours and a method for assembling the same bearing apparatus.

According to an aspect of the invention, there is provided a bearing apparatus in which a support shaft which supports an outer ring is interposed between a pair of opposed side walls which make up a bearing holding member in such a manner as to be prohibited from rotating, wherein fitting holes are provided in the side walls, a hardening treatment is imparted to the whole of a surface of the support shaft and fitting recesses are provided in axial end faces of the support shafts, and fixing pins are fitted in the fitting holes to extend therefrom into the fitting recesses in such a manner as to be prohibited from rotating, whereby the support shaft is fixed to the side walls via the fixing pins in such a manner as to be prohibited from rotating.

As a form in which the fixing pins are fitted in the fitting holes to extend therefrom into the fitting recesses in such a manner as to be prohibited from rotating, inner circumferential surfaces of the fitting holes and the fitting recesses of the side walls and the support shaft, respectively, are preferably formed into a shape having a non-circular cross section and are made to be opposed coaxially to each other, and on the other hand, the fixing pins preferably have an external shape which corresponds to the cross-sectional shape of the fitting holes and the fitting recesses throughout the pins or at least both ends thereof. In this case, the non-circular shape includes a flower-like shape, a polygonal shape, a key groove shape, a semi-elliptic shape, a concave or convex shape and the like, and any one shape selected from the above shapes or a combination thereof may preferably be used as the non-circular shape.

The bearing apparatus can be applied to a rocker arm attached to a valve train of an automotive engine and a planetary gear assembly making up an automatic transmission.

According to the aspect of the invention, since the support shaft can be fixed to the side walls via the fixing pins which are separate from the support shaft, a high hardening surface treatment can be applied to the whole surface of the support shaft through quenching in order to increase the rolling life and resistance to wear thereof. Due to this, the conventionally required complexity is no more necessary in which the induction hardening is imparted only to the shaft intermediate portion of the support shaft, while no quenching is imparted to the shaft end portions thereof. In addition, according to the aspect of the invention, since the fixing pins are fitted in the fitting holes in the side walls and the fitting recesses in the support shaft in such a manner as to be prohibited from rotating, the support shaft is allowed to be fixed to the side walls in such a manner as to be prohibited from rotating, and therefore, the conventional crimping of the shaft end portions to the side walls to fix the support shaft to the side walls is no more required. Thus, the generation of the creep between the shaft end portions of the support shaft and the inner circumferential surfaces of the through holes of the side walls, which is attributed to the insufficient crimping of the relevant portions, is no more caused, and the wear of the shaft end portions of the support shaft and the through holes, which is attributed to the creep so generated, and the free rotation of the support shaft to the through holes, which is attributed to the wear, are no more caused. Furthermore, according to the aspect of the invention, the conventional situation is no more caused in which the support shaft is expanded to be deformed by the crimping force to thereby cause the defect in rotation of the outer ring that is supported on the support shaft. Additionally, according to the aspect of the invention, when attempting to install the support shaft between both the side walls, the support shaft can be installed between both the side walls as part of the assembly of the rollers, the outer ring and the support shaft, and this obviates the necessity of the conventional holding plug, a superior assembling property being thereby provided, whereby the assembling costs can also be reduced.

Note that as another form in which the fixing pins are fitted in the fitting holes to extend therefrom into the fitting recesses in such a manner as to be prohibited from rotating, the fitting holes provided in the side walls and the fitting recesses provided on the support shaft are formed into a circular shape, while the fitting holes and the fitting recesses are made to be opposed to each other at positions which are deviated from the coaxial positions, and in this opposed state, the fixing pins are fitted in the fitting holes and the fitting recesses at the ends thereof, so that the support shaft is fixed to the side walls via the fixing pins in such a manner as to be prohibited from rotating.

The fixing pins are preferably fitted in the fitting holes via interference fit and are fitted in the fitting recesses via transition fit or loose interference fit, whereby the fixing pins are made difficult to be dislodged from the fitting holes and the fitting recesses by virtue of wear generated in association with operation thereof. In this case, when the side walls are thin in thickness, being different from the case where the support shaft is directly press fitted in the fitting holes in the side walls, or, the shaft end portions of the support shaft are fitted in the fitting holes in the side walls, since the rotation of the support shaft may be prohibited by virtue of the relationship between the fixing pins and the fitting holes in the side walls which are both formed into the non-circular shape, the fixing pins are allowed to be fitted in the fitting holes via interference fit to such an extent that the thin side walls are not deformed.

According to another aspect of the invention, there is provided a method for assembling a bearing apparatus in which a support shaft which supports an outer ring is interposed between a pair of opposed side walls which make up a bearing holding member in such a manner as to be prohibited from rotating, comprising the steps of installing an outer ring having a plurality of rollers disposed on an inner circumferential surface thereof on the support shaft having non-circular fitting recesses provided in both end faces thereof so as to form an assembly, interposing the assembly between both the side walls, so that non-circular fitting holes provided in both the side walls and the fitting recesses of the support shaft are made to be opposed coaxially to each other to thereby be aligned with each other, and fitting the fixing pins in the fitting holes and the fitting recesses which are opposed coaxially to each other at the non-circular ends thereof, so that the support shaft is fixed to the side walls via the fixing pins in such a manner as to be prohibited from rotating.

According to the assembling method of the invention, when attempting to install the support shaft between both the side walls, the support shaft is allowed to be installed between the side walls as part of the assembly into which the rollers, the outer ring and the support shaft are integrated, whereby the conventional holding plug is no more necessary, and a superior assembling property can thereby be provided, thereby making it possible to reduce the assembling costs.

According to the invention, there can be provided the bearing apparatus which can facilitate the application of a necessary surface hardening treatment to the whole of the support shaft, prevent the occurrence of a situation in which the support shaft is allowed to freely rotate relative to the side walls, prevent the occurrence of a situation in which the outer ring fitted on the support shaft is prohibited from rotating, and enable the installation of the support shaft, the rollers and the outer ring between both the side walls as an assembly, and a method for assembling the same bearing apparatus.

### BRIEF DESCRIPTION OF THE DRAWINGS

Fig. 1 is a sectional view of a bearing apparatus according to an embodiment of the invention.
Fig. 2 is a side view of a rocker arm to which the bearing apparatus shown in Fig. 1 is applied.
Fig. 3 is a sectional view taken along the line B-B in Fig. 2.
Figs. 4A to 4C are drawings which show constituent components making up the rocker arm shown in Fig. 2.
Fig. 5 is a sectional view which shows an assembling method of the rocker arm shown in Fig. 2.
Fig. 6 is a sectional view which shows the assembling method of the rocker arm shown in Fig. 2.
Fig. 7 is a sectional view which shows the assembling method of the rocker arm shown in Fig. 2.
Fig. 8 is a sectional view of an automatic transmission planetary gear assembly to which the bearing apparatus shown in Fig. 1 is applied.
Fig. 9 is a side view of a rocker arm to which a conventional bearing apparatus is applied.
Fig. 10 is a sectional view taken along the line A-A in Fig. 9.

### DETAILED DESCRIPTION OF PREFERRED EMBODIMENTS

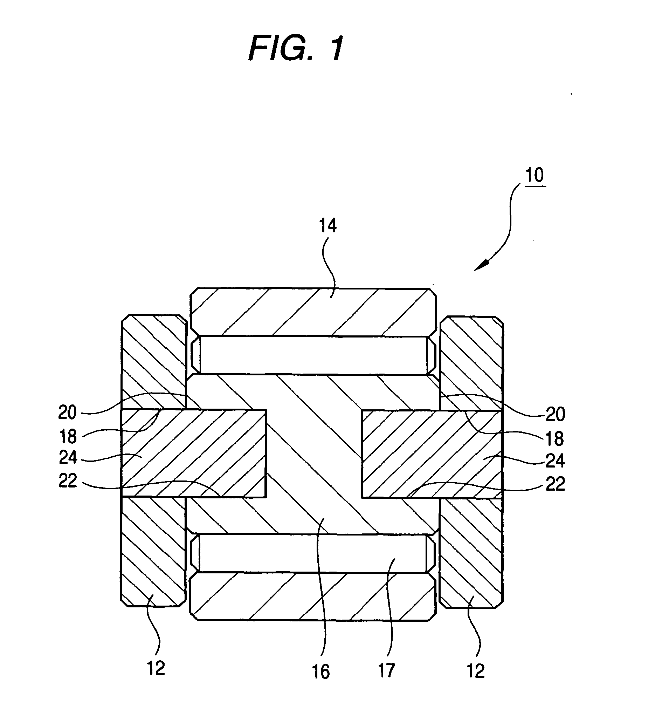

Hereinafter, referring to the accompanying drawings, a bearing apparatus according to an embodiment of the invention will be described. Fig. 1 is a sectional view of the bearing apparatus. A bearing apparatus 10 shown in the same figure is a bearing apparatus in which a support shaft 16 which supports an outer ring 14 is non-rotatably interposed between a pair of opposed side walls 12 which make up a bearing holding member. Through holes 18 having a hexagonal cross-sectional shape (a non-circular shape) are coaxially provided in the pair of side walls 12. A whole surface of the support shaft 16 is hardened by virtue of quenching or the like, and fitting recesses 22 each having a hexagonal cross-sectional shape are provided in shaft end faces 20 of the support shaft 16. The fitting holes 18 in the side walls 12 and the fitting recesses 22 on the support shaft 16 are disposed at coaxial positions so as to be opposed to each other. Fixing pins 24 are each formed into the shape of a pin having a hexagonal cross-sectional shape and are fitted at ends thereof in the fixing holes 18 and the fitting recesses 22 which are disposed at the coaxial positions so as to be opposed to each other. The support shaft 16 are non-rotatably fixed to the side walls 12 via the fixing pins 24 in such a state that the support shaft 16 is fitted in the fitting holes 18 and the fitting recesses 22.

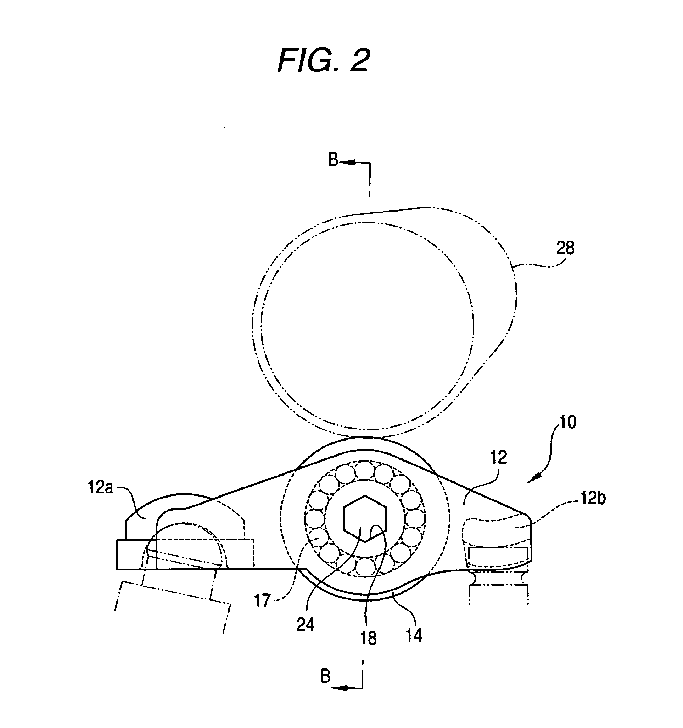

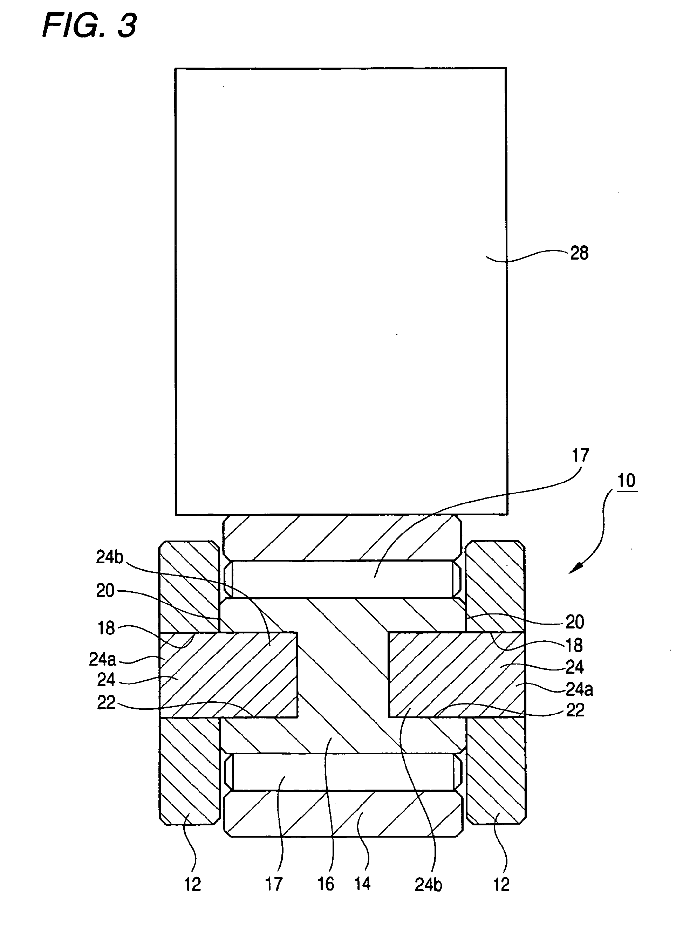

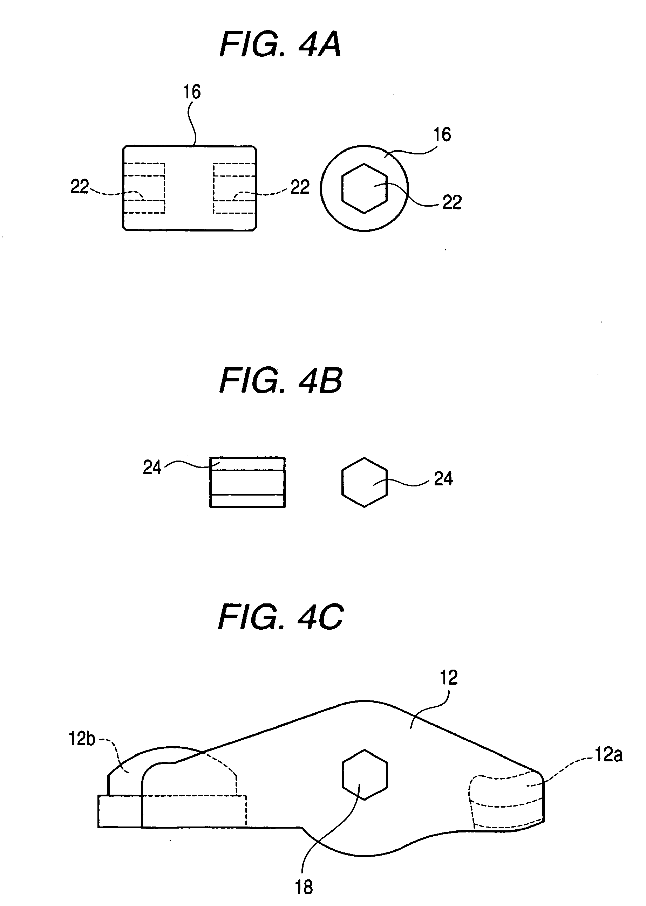

Referring to Figs. 2 to 4C, a rocker arm 10 (the reference numeral is made to correspond to that of the bearing apparatus for the sake of easy understanding) to which the bearing apparatus 10 is applied as an example of applications thereof will be described. Fig. 2 is a side view of the rocker arm 10, Fig. 3 is a sectional view of the rocker arm 10 taken along the line B-B in Fig. 1, and Figs. 4A to 4C show constituent components of the rocker arm 10. In Fig. 4A, a left hand drawing is a side view of the support shaft 16, and a right hand drawing is a front view thereof. In Fig. 4B, a left hand drawing is a side view of the fixing pin 24, and a right hand drawing is a front view thereof. Fig. 4C is a side view of one of the side walls 12 which constitute a body of the rocker arm.

The rocker arm 10 shown in Figs. 2 to 4C is of an end pivot type and includes a pair of opposed side walls 12 made of a steel material which constitute a rocker arm body which is a bearing holding member. Both the side walls 12 are preferably of the same shape and are opposed face to face in parallel. A lash adjuster receiving portion (a pivot receiving portion) 12a and a valve stem receiving portion 12b are provided at respective longitudinal ends of both the side walls 12.

Through holes 18 each having a hexagonal cross-sectional shape (a non-circular shape) are formed in both the side walls 12 at longitudinally intermediate portions thereof in a coaxial fashion. Each through hole 18 penetrates through the side wall 12 axially with the same hole diameter maintained throughout the through hole 18. Note that the invention can be applied to a rocker arm of center pivot type. In this rocker arm 10, while there is imposed no limitation on the thickness of the side walls 12, the side walls 12 are thin in thickness. For a passenger vehicle, the side walls 12 are thinned to, for example, on the order of 3mm.

The whole surface of a support shaft 16 is made of a steel material of which a surface is heat treated to have a high hardness by virtue of quenching, tempering or the like. There is imposed no limitation on the type of steel used for the support shaft 16. The support shaft 16 is made of, for example, a steel material which is heat treated by virtue of quenching, tempering or the like. The surface of the support shaft 16 may further be treated to have a higher hardness by virtue of carburizing, high-concentration carburizing, carburizing and nitriding, nitriding, or the like. While any type of steel can be used for the support shaft 16, steel materials to SUS, SUJ, SKH are preferred. Fitting recesses 22 are formed axially in both end faces of shaft end portions 16a of the support shaft 16 to a predetermined recess depth and into a shape having a hexagonal cross section (a non-circular shape). While these fitting recesses are closed at bottoms thereof, a through hole which passes throughout the support shaft 16 can be included in the fitting recess.

An outer ring 14 is fitted on the support shaft 16. A plurality of needle rollers 17 are interposed between the support shaft 16 and the outer ring 14. A cam 28 is externally in contact with an outer circumferential surface of the outer ring 14. Fixing pins 24 are each formed into a shape having a hexagonal cross section which is uniform in area throughout the length thereof and are fitted in the fitting holes 18 in the side walls 12 and the fitting recesses 22 on the support shaft 16 at ends thereof, respectively. In this case, it is preferable that one end 24a of the fixing pin 24 is fitted in the fitting hole 18 in the side wall 12 by virtue of interference fit, while the other end 24b of the fixing pin 24 is fitted in the fitting recess 22 on the support shaft 16 by virtue of transition fit or loose interference fit. Since the linear thermal expansion coefficient of the fixing pins 24 preferably coincides with that of the support shaft 16, the material of the fixing pins 24 may include a steel material of the same type as that of the support shaft 16 or a steel material having a linear thermal expansion coefficient which is approximate to that of the support shaft 16. However, the type of material for the fixing pins 24 is not limited thereto, and any other metals than the steel materials may be used. In this case, it is preferable that the linear thermal expansion coefficient of a metal used coincides with that of the support shaft 16.

Thus, while it is preferable that the same steel material is used as materials for the side walls 12, the support shaft 16 and the fixing pins 24 in terms of having the same linear thermal expansion coefficient, the same material does not necessarily have to be so used. For example, it may be possible that the support shaft 16 and both the side walls 12 are made of steel materials, while the fixing pins 24 are made of a high-strength hard resin material. In this case, it is preferable to select a resin material for the fixing pins 24 which has a linear thermal expansion coefficient identical or approximate to that of the side walls 12 and the support shaft 16.

In the rocker arm 10 that is configured as has been described hitherto, the support shaft 16 can be fixed to the side walls 12 via the fixing pins 24. Consequently, the hardness of the support shaft 16 at the shaft end portions does not have to be set to such an extent that the end faces can be crimped as in the case with the conventional rocker arm, and hence, the whole of the support shaft 16 can be heat treated so as to have a hardness required to be installed into a valve train of an automotive engine, whereby a support shaft 16 can be produced which has high hardness and high resistance to wear which are determined in consideration of ingress of foreign matters on to the support shaft 16 and wear of the support shaft 16.

In addition, in the rocker arm 10, since the fixing pins 24, the fitting holes 18 in the side walls 12 and the fitting recesses 22 on the support shaft 16 are all formed into the shape having the non-circular or hexagonal cross section, the support shaft 16 can be fixed to the side walls 12 in such a manner as to be prohibited from rotating relative to the same side walls 12. Consequently, with the rocker arm 10 of the embodiment, there occurs no situation in which the support shaft 16 is allowed to freely rotate relative to the side walls 12 as in the case with the conventional rocker arm. Furthermore, with the rocker arm 10 of the embodiment, there occurs no situation in which the support shaft 16 is expanded to be deformed by virtue of the crimping force to thereby cause a defect in rotation of the outer ring 14 which is supported by the support shaft 16, as in the case with the conventional rocker arm. Furthermore, with the rocker arm of the embodiment, when attempting to install the support shaft 16 between both the side walls 12, the support shaft 16 can be installed between both the side walls 12 as part of an assembly into which the needle rollers 17, the outer ring 14 and the support shaft 16 are integrated, and hence the conventional holding plug is not necessary, whereby a superior assembling property can be provided, and hence, the assembling costs can be reduced.

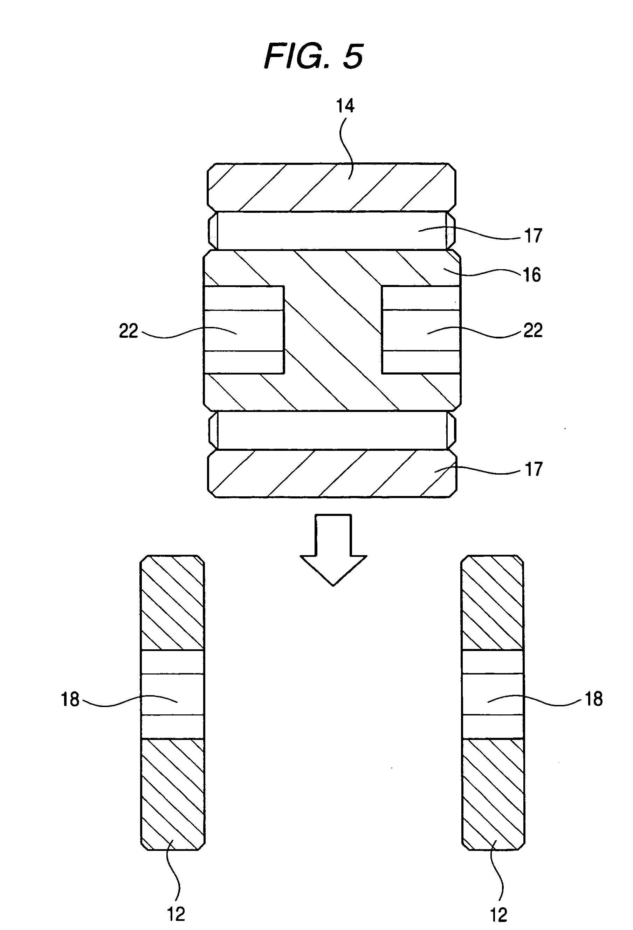

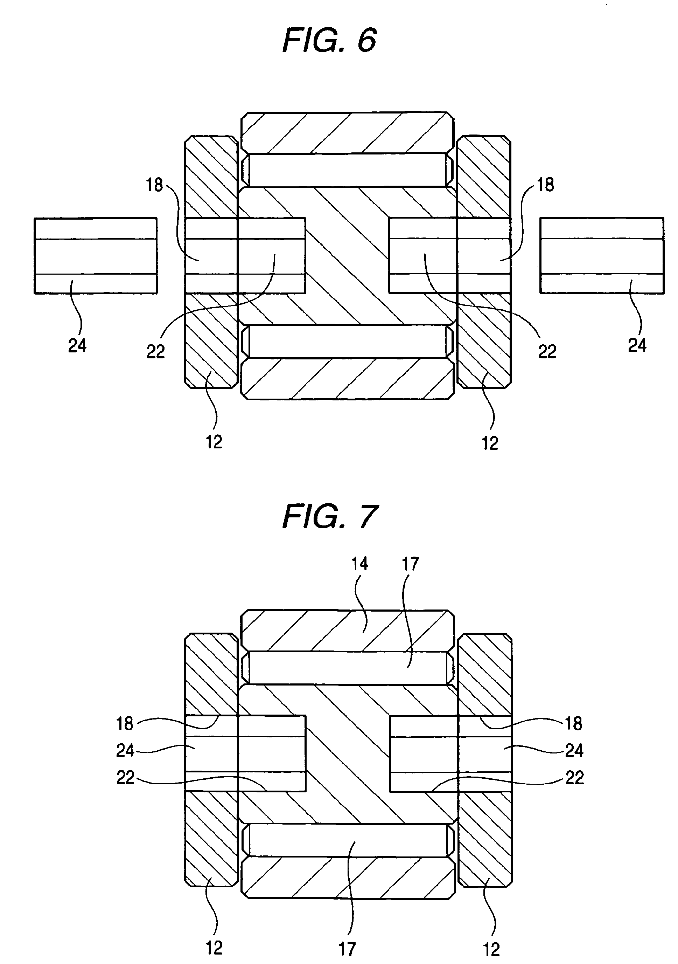

A method for assembling the rocker arm 10 will be described by reference to Figs. 5 to 7. Note that in Figs. 5 to 7, for the sake of simple understanding of illustrations, the pair of side walls 12 are shown as being separated transversely with a lash adjuster receiving portion and a valve stem receiving portion thereof omitted from the drawings. This assembling method is a method for assembling the rocker arm 10 in which the support shaft 16 which supports the outer ring 14 is non-rotatably interposed between the pair of side walls 12 which make up a bearing holding member, which comprises a first step of, as shown in Fig. 5, installing the outer ring 14 having the plurality of needle rollers 17 disposed on the inner circumferential surface thereof on the support shaft 16 having the hexagonal fitting recesses provided in both the end faces thereof so as to form the assembly, a second step of, as shown in Fig. 6, interposing the assembly between both the side walls 12, so that the hexagonal fitting holes 18 provided in both the side walls 12 and the hexagonal fitting recesses 22 of the support shaft 16 are made to be opposed coaxially to each other to thereby be aligned with each other, and a third step of, as shown in Fig. 7, fitting the fixing pins 24 in the fitting holes 18 and the fitting recesses 22 which are opposed coaxially to each other at the hexagonal ends thereof, so that the support shaft 16 is non-rotatably fixed to the side walls 12 via the fixing pins 24.

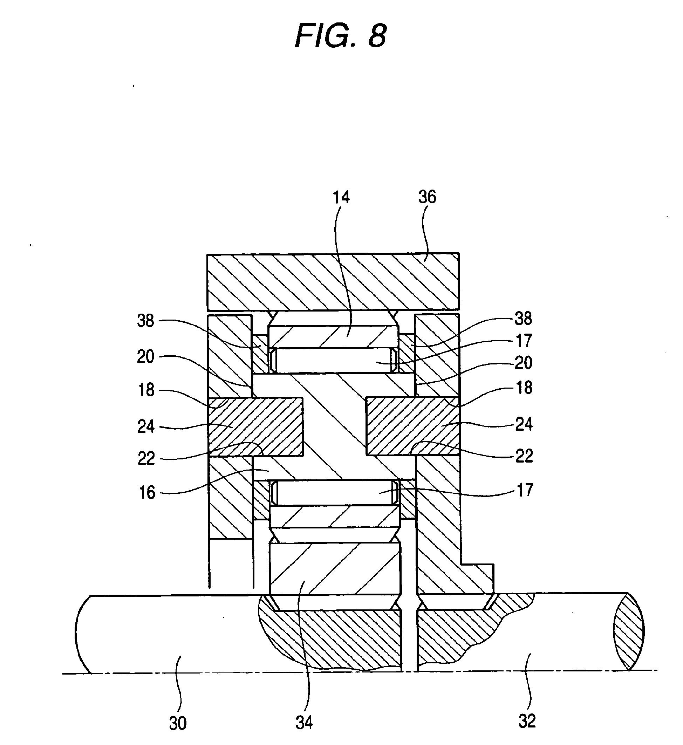

Referring to Fig. 8, an automatic transmission planetary gear assembly will be described as another example to which the bearing apparatus of the invention is applied. Reference numeral 14 denotes a plurality of planetary gears (an outer ring), 12 denoting two axial carriers (opposed side walls), 16 a support shaft, 17 a plurality of needle rollers, 18 fitting holes provided in the carriers 12, 20 shaft end faces, 22 fitting recesses provided on the support shaft 16, and 24 fixing pins which are fitted in the fitting holes 18 and the fitting recesses 22 so as to non-rotatably fix the support shaft 16 to the carriers 12. The planetary gear assembly of this embodiment, which is made up of the aforesaid constituent components, includes the bearing apparatus described in Fig. 1. Note that as a bearing, at least the planetary gears 14 which function as an outer ring and the plurality of needle rollers 17 which are disposed on an inner circumferential surface of the planetary gears 14. Reference numeral 30 denotes a primary rotary shaft, 32 a secondary rotary shaft, 34 a sun gear, 36 an internal gear and 38 washers. The planetary gear assembly of the embodiment is made up of the aforesaid constituent components.

In this embodiment, the internal gear 36 is supported in such a manner as to freely rotate relative to the sun gear 34 and the carriers (the side walls) 12. The sun gear 34 has splines and helical gear teeth formed, respectively, on inner and outer circumferential surfaces thereof. The primary rotary shaft 30 is spline fitted in the inner circumferential surface of the sun gear 34. The planetary gear 14 (the outer ring) has a central hole in an inner circumferential surface and helical gear teeth are formed on an outer circumferential surface of the planetary gear 14. The support shaft 16 is inserted in an inner circumference of the planetary gear 14 via the needle rollers 17 and the retainers 38.

The operation of the planetary gear assembly will be described with the internal gear 36 fixed. When the primary rotary shaft 30 is driven, since the sun gear 34 rotates together therewith, the planetary gears 14 rotate about their own axes while revolving about the sun gear 34, and in association with the revolving of the planetary gears 14 around the sun gear 34, the carriers 12 and the secondary rotary shaft 32 are driven, whereby the rotary power of the primary rotary shaft 30 is transmitted to the secondary rotary shaft 32 while being reduced in speed. On the other hand, when the secondary rotary shaft 32 is driven, since the carriers 12 rotate together therewith, the planetary gears 14 rotate about their own axes while revolving about the sun gear 34, and in association with the revolving of the planetary gears 14 around the sun gear 34, the sun gear 34 and the primary rotary shaft 30 are driven, whereby the rotary power of the secondary rotary shaft 32 is transmitted to the primary rotary shaft 30 while being increased in speed.

In the configuration described above, the fitting holes 18 are provided in the carriers (the side walls) 12 coaxially with each other, and the fitting holes 18 so provided are formed into a shape having a hexagonal cross section (a non-circular shape) which is constant axially throughout the carriers 12. The whole surface of the support shaft 16 is quenched and the fitting recesses 22 having a hexagonal cross section are provided in the shaft end faces 20 of the support shaft 16. The fitting holes 18 in the carriers 12 and the fitting recesses 22 on the support shaft 16 are disposed at coaxial positions so as to be opposed to each other. The fixing pins 24 are formed into a pin shape having a hexagonal cross section and ends thereof are fitted in the fitting holes 18 and the fitting recesses 22 which are disposed at the coaxial positions so as to be opposed to each other, The support shaft 16 is non-rotatably fixed to the carriers (the side walls) 12 via the fixing pins 24 which are fitted in the fitting holes 18 and the fitting recesses 22.

Also in the planetary gear assembly, the support shaft 16 can be fixed to the side walls 12 via the fixing pins 24. Consequently, the hardness at the shaft end portions of the support shaft 16 does not have to be set, as was done in the conventional technique, to such an extent that the end faces can be crimped, and hence, the whole of the support shaft 16 can be heat treated to have a high hardness, thereby making it possible to produce a support shaft 16 which has high hardness and high resistance to wear in consideration of ingress of foreign matters on to an outer circumferential surface (a raceway surface) and wear of the raceway surface of the support shaft 16. Thus, also in this embodiment, similar function and advantage to those of the previous embodiment can be exhibited.

## Claims

1. A bearing apparatus (10) comprising:
a pair of opposed side walls (12) which constitute a bearing holding member and each having a fitting hole (18);
a supporting shaft (16) which is subjected to a hardening treatment and has fitting recesses (22) at opposed axial end faces thereof; and
fixing pins (24) which extend between the fitting holes (18) and the fitting recesses (22) and are non-rotatably fitted in the fitting holes and in the fitting recesses, respectively, so that the supporting shaft is non-rotatably fixed to the pair of side walls.

2. The bearing apparatus according to claim 1, wherein
an inner circumferential surface of the fitting hole (18) and the fitting recess (22) of the side wall are formed into a shape having a non-circular cross section and are made to be coaxially opposed to each other, and
at least opposed ends of the fixing pins (24) have an external shape which corresponds to the cross-sectional shape of the inner circumferential surface of the fitting hole and the fitting recesses, respectively.

3. The bearing apparatus according to claim 2, wherein the fixing pins (24) are fitted in the fitting holes (18) via interference fit and are fitted in the fitting recesses (22) via transition fit or loose interference fit.

4. A method of assembling a bearing apparatus (10) in which a support shaft (16) which supports an outer ring (14) is non-rotatably interposed between a pair of opposed side walls (12) which constitutes a bearing holding member, the method comprising:
installing the outer ring (14) having a plurality of rollers (17) disposed on an inner circumferential surface thereof on the support shaft (16) formed.with fitting recesses (18) having non-circular cross sectional shape at both opposed end faces thereof so as to form an assembly;
interposing the assembly between the side walls (12) and arranging the assembly so that the fitting recesses (22) are made to be opposed coaxially to fitting holes (18) having non-circular cross-sectional shape provided through the side walls; and
non-rotatably fixing the support shaft (16) to the side walls (12) by fitting non-circular ends (24a) of fixing pins (24) in the fitting holes (18) and in the fitting recesses (22) which are opposed coaxially to each other, respectively.

## Patentansprüche

1. Lagervorrichtung (10), mit:
einem Paar von gegenüberliegenden Seitenwänden (12), die ein Lager-Halteelement bilden und jeweils eine Befestigungsöffnung (18) aufweisen;
einer Lagerwelle (16), die einer Härtebehandlung unterzogen wurde, und an ihren gegenüberliegenden axialen Endflächen Einbauausnehmungen (22) aufweist; und
Befestigungsstiften (24), die sich zwischen den Befestigungsöffnungen (18) und den Einbauausnehmungen (22) erstrecken und nicht drehbar in den Befestigungsöffnungen bzw. in den Einbauausnehmungen befestigt sind, sodass die Lagerwelle nicht drehbar am Paar der Seitenwände befestigt ist.

2. Lagervorrichtung nach Anspruch 1, wobei eine innere Umfangsfläche der Befestigungsöffnung (18) und der Einbauausnehmung (22) der Seitenwand in einer Form mit einem nicht kreisförmigen Querschnitt ausgebildet sind, und einander koaxial gegenüberliegen, und
zumindest die gegenüberliegenden Enden der Befestigungsstifte (24) einer äußere Form aufweisen, die der Querschnittsform der inneren Umfangsfläche der Befestigungsöffnung bzw. der Einbauausnehmung entspricht.

3. Lagervorrichtung nach Anspruch 2, wobei die Befestigungsstifte (24) in den Befestigungsöffnungen (18) durch eine Presspassung befestigt sind und in der Einbauausnehmung (22) durch eine Übergangspassung oder eine bewegliche Presspassung befestig sind.

4. Verfahren zum Zusammenbau einer Lagervorrichtung (10), bei der eine Lagerwelle (16), die einen Außenring (14) lagert, nicht drehbar zwischen einem Paar von gegenüberliegenden Seitenwänden (12) eingefügt ist, die ein Lager-Halteelement bilden, wobei das Verfahren folgendes aufweist:
Einbauen des Außenrings (14) mit einer Mehrzahl von Wälzkörpern (17), die an einer inneren Umfangsfläche davon auf der Lagerwelle (16) angeordnet sind, die mit Einbauausnehmungen (18) mit einer nicht kreisförmigen Form an deren beiden gegenüberliegenden Enden ausgebildet ist, um eine Baugruppe zu bilden;
Einfügen der Baugruppe zwischen die Seitenwände (12) und Ausrichten der Baugruppe, sodass die Einbauausnehmungen (22) den Befestigungsöffnungen (18) mit der nicht kreisförmigen Querschnittsform gegenüberliegen, die in den Seitenwänden vorgesehen sind;
nicht drehbares Fixieren der Lagerwelle (16) an den Seitenwänden (12) durch Einpassen von nicht kreisförmigen Enden (24a) von Befestigungsstiften (24) in den Befestigungsöffnungen (18)bzw. in den Einbauausnehmungen (22), die einander koaxial gegenüberliegen.

## Revendications

1. Dispositif de palier (10) comprenant :
une paire de parois latérales opposées (12) qui constituent un élément de support de palier et comportent chacune un trou d'assemblage (18) ;
un axe de support (16) qui est soumis à un traitement de durcissement et comporte des évidements d'assemblage (22) sur ses faces d'extrémités axiales opposées ; et
des chevilles de fixation (24) qui s'étendent entre les trous d'assemblage (18) et les évidements d'assemblage (22) et qui sont logées de manière non rotative dans les trous d'assemblage et dans les évidements d'assemblage, respectivement, de sorte que l'axe de support est fixé de manière non rotative aux parois latérales.

2. Dispositif de palier selon la revendication 1, dans lequel :
une surface périphérique intérieure du trou d'assemblage (18) et l'évidement d'assemblage (22) de la paroi latérale ont une forme de section non circulaire et s'opposent de façon coaxiale l'un à l'autre, et
au moins les extrémités opposées des chevilles de fixation (24) ont une forme extérieure qui correspond à la forme de section de la surface périphérique intérieure du trou d'assemblage et des évidements d'assemblage, respectivement.

3. Dispositif de palier selon la revendication 2, dans lequel les chevilles de fixation (24) sont montées dans les trous d'assemblage (18) en ajustement avec serrage et sont montées dans les évidements d'assemblage (22) en ajustement incertain ou en ajustement avec jeu.

4. Procédé d'assemblage d'un dispositif de palier (10) dans lequel un axe de support (16) qui supporte une bague extérieure (14) est intercalé de façon non rotative entre deux parois latérales opposées (12) qui constituent un élément de support de palier, le procédé comprenant les étapes consistant à :
installer la bague extérieure (14) ayant une pluralité de rouleaux (17) disposés sur une surface périphérique intérieure de celle-ci sur l'axe de support (16) pourvu d'évidements d'assemblage (18) ayant une forme de section non circulaire au niveau de leurs deux faces d'extrémités opposées afin de former un ensemble ;
intercaler l'ensemble entre les parois latérales (12) et agencer l'ensemble de telle manière que les évidements d'assemblage (22) se retrouvent opposés de façon coaxiale à des trous d'assemblage (18) ayant une forme de section non circulaire prévue à travers les parois latérales ; et
fixer de manière non rotative l'axe de support (16) sur les parois latérales (12) en montant des extrémités non circulaires (24a) de chevilles de fixation (24) dans les trous d'assemblage (18) et dans les évidements d'assemblage (22) qui sont opposés entre eux de façon coaxiale, respectivement.
